# EUROPÄISCHE PATENTSCHRIFT

(11) **EP 1 496 597 B1**
(45) Veröffentlichungstag und Bekanntmachung des Hinweises auf die Patenterteilung: **14.11.2007**
(21) Anmeldenummer: 04103004.0
(22) Anmeldetag: 28.06.2004
(51) Int. Cl.: H02K 3/50

(54) **Vorrichtung zum Abstützen eines Statorwickelkopfs**
Apparatus for supporting a stator end winding
Dispositif pour soutenir des têtes d'enroulement du stator

(30) Priorität: 05.07.2003 DE 10330523
(43) Veröffentlichungstag der Anmeldung: 12.01.2005
(73) Patentinhaber: Alstom Technology Ltd, 5400 Baden (CH)
(72) Erfinder: Hediger, Daniel, 5504 Othmarsingen (CH); Lukacic, Hrvoje, 5242 Birr (CH); Madle, Duncan, 90000 Belfort (FR); Stallone, Francesco, 6600 Locarno (CH); Ziegler, Alfred, 5408 Ennetbaden (CH)

(56) Entgegenhaltungen:
- EP-A- 0 926 802
- DE-A1- 4 024 395
- DE-B- 1 208 000
- US-A- 5 485 050

## Beschreibung

### Technisches Gebiet

Die vorliegende Erfindung betrifft eine Vorrichtung zum Abstützen einer Wicklung eines Stators, insbesondere eines Generatorstators einer Kraftwerksanlage, mit den Merkmalen des Oberbegriffs des Anspruchs 1.

### Stand der Technik

Üblicherweise besitzt ein Stator, insbesondere ein Generatorstator einer Kraftwerksanlage, einen Kern sowie eine Wicklung, die mehrere Wicklungsstäbe aufweist. Diese Wicklungsstäbe sind zumindest an einer axialen Stirnseite des Kerns des Stators mit ihren Enden aus dem Kern herausgeführt und so umgebogen und miteinander verbunden, dass sie an der Stirnseite des Kerns einen Wickelkopf bilden, der sich mit zunehmenden Abstand vom Kern trichterförmig oder kegelförmig erweitert. Für den Betrieb des Stators muss dieser Wickelkopf in der Achsrichtung des Stators, also axial unter Zugspannung am Kern abgestützt werden. Desweiteren ist es erforderlich, den Wickelkopf radial von außen nach innen mit einer Vorspannung zu belasten. Dieses Spannen bzw. Abstützen des Wickelkopfs ist notwendig, um die im Betrieb auftretenden elektrodynamischen Kräfte aufnehmen zu können. Zum Teil wird die gewünschte Verspannung der Wicklung bzw. des Wickelkopfs bereits bei der Herstellung des Stators aufgebracht. Im Betrieb des Stators kann es jedoch zu Setzungsvorgängen und dergleichen kommen, die sich nachteilig auf die an der Wicklung bzw. am Wickelkopf wirksame Spannung auswirken können.

Eine Abstützvorrichtung der eingangs genannten Art ist beispielsweise aus der EP 0 926 802 A2 bekannt, wobei den Wicklungsstützen jeweils eine Spanneinrichtung zugeordnet ist, die zwischen dem Wickelkopf und der jeweiligen Wicklungsstütze angeordnet ist und die eine Stützkraft erzeugt, mit welcher sich die jeweilige Wicklungsstütze über die Spanneinrichtung am Wickelkopf abstützt.

Aus der DE 1 208 000 ist eine weitere Abstützvorrichtung für Statorwicklungen bekannt, die mit am Statorkern fixierten Stützwänden sowie mit am Statorkern befestigen winkelförmigen Stützkörpern arbeitet. Die Stützwände stützen sich über Isolierdruckplatten radial außen am Wickelkopf ab, wobei die Isolierdruckplatten einerseits an den Stützwänden und andererseits am Wickelkopf befestigt sind. Die Stützkörper stützen sich axial außen über Druckstücke am Wickelkopf ab, wobei die Druckstücke am Wickelkopf befestigt sind. Bei der bekannten Abstützvorrichtung wird somit eine Trennung der axialen Abstützung, realisiert durch die Stützkörper und die Druckstücke, von der radialen Abstützung, realisiert durch die Stützwände und die Isolierdruckplatten, erreicht.

Die DE 40 24 395 A1 zeigt eine Abstützvorrichtung, bei der die einzelnen Wicklungsstützen über Stützringe aneinander abgestützt sind.

Aus der US 5,798,595 ist eine Abstützvorrichtung bekannt, bei welcher der Wickelkopf mit Hilfe von Stützringen verspannt und radial abgestützt ist. Die Stützringe erstrecken sich dabei in Umfangsrichtung und umschließen den Wickelkopf an seiner Außenseite. Der Wickelkopf stützt sich dabei senkrecht zu seiner Mantelfläche an diesen Stützringen nach außen ab. Mit Hilfe dieser Stützringe kann eine vorbestimmte Vorspannung bei der Herstellung der Wicklung des Stators in den Wickelkopf eingebracht werden. Durch Setzvorgänge kann diese Spannung jedoch nachlassen. Bei der bekannten Abstützvorrichtung ist den Wicklungsstützen jeweils eine Dämpfungseinrichtung zugeordnet, die mit Druckfedern arbeitet, die zwischen der jeweiligen Wicklungsstütze und den Stützringen angeordnet sind. Hierdurch ergibt sich für die Stützringe eine gefederte Lagerung an den Wicklungsstützen. Gleichzeitig können die Druckfedern eine axiale Verspannung der Wicklung erzeugen. Eine zusätzliche radiale oder senkrecht zur Mantelfläche gerichtete Verspannung des Wickelkopfs können die Druckfedern jedoch nicht erreichen, da in dieser Richtung die Stützringe die Federkräfte aufnehmen.

Aus der US 4,488,079 ist eine weitere Abstützvorrichtung für einen Wickelkopf bekannt, bei welcher der Wickelkopf mit Hilfe von Verspannplatten, die radial außen am Wickelkopf angeordnet sind, versteift ist. Die Wicklungsstützen sind dann an den Verspannplatten des Wickelkopfs radial bzw. senkrecht zur Mantelfläche abgestützt.

### Darstellung der Erfindung

Hier will die Erfindung Abhilfe schaffen. Die Erfindung, wie sie in den Ansprüchen gekennzeichnet ist, beschäftigt sich mit dem Problem, für die Abstützung einer Wicklung eines Stators bzw. eines Wickelkopfs eine verbesserte Ausführungsform anzugeben, die insbesondere bei wechselnden Betriebsbedingungen die gewünschte Spannung oder Abstützungswirkung besser aufrecht erhalten kann.

Dieses Problem wird erfindungsgemäß durch den Gegenstand des unabhängigen Anspruchs gelöst. Vorteilhafte Ausführungsformen sind Gegenstand der abhängigen Ansprüche.

Bei der erfindungsgemäßen Abstützvorrichtung können die den Wicklungsstützen zugeordneten Spanneinrichtungen umfangsmäßig verteilt die gewünschte Vorspannung in den Wickelkopf einleiten. Die Spanneinrichtungen können dabei z.B. mit Hilfe von Federeinrichtungen, ohne weiteres so ausgestaltet werden, dass sie Setzungsvorgänge oder dergleichen im Wickelkopf mehr oder weniger ausgleichen können, so dass auch bei sich ändernden Bedingungen im wesentlichen stets die gewünschte Verspannung gewährleistet werden kann.

Die erfindungsgemäß vorgeschlagene Kopplungseinrichtung verhindert Relativbewegungen zwischen dem Wickelkopf und der Abstützvorrichtung bzw. der jeweiligen Wicklungsstütze in einer Mantellinienrichtung des Wickelkopfs und gewährleistet dabei, dass die Wicklungsstützen bezüglich der Mantellinienrichtung stets die selbe Relativlage zum Wickelkopf aufweisen. Dies ist für eine optimale Stützkrafteinleitung in den Wickelkopf von Vorteil. Darüber hinaus ist diese Zwangskopplung für den Fall von besonderer Bedeutung, dass sich der Wickelkopf auf den Kern des Stators zu bewegt, was beispielsweise beim Abkühlen der Wicklung des Stators erfolgt. Bei einer derartigen Bewegung führt die Zwangskopplung über die wenigstens eine Kopplungseinrichtung dazu, dass die Wicklungsstützen bzw. die Abstützvorrichtung ebenfalls gegen die Stirnseite des Kerns zurückbewegt werden. Dabei hat sich gezeigt, dass es für die ordnungsgemäße Funktion der Abstützvorrichtung von besonderer Bedeutung ist, dass die Kopplungseinrichtung Relativbewegungen zwischen Wickelkopf und jeweiliger Wicklungsstütze in Umfangsrichtung des Wickelkopfs sowie senkrecht zur Mantelfläche des Wickelkopfs zuläßt. Hierdurch können Verwindungen oder Ausdehnungen des Wickelkopfs senkrecht zur Mantelfläche ohne Behinderung durch die Kopplungseinrichtungen erfolgen. Insoweit kommt es im Bereich der Kopplungseinrichtungen nicht zu unerwünschten Verspannungen zwischen den Wicklungsstützen und dem Wickelkopf.

Bei einer besonders vorteilhaften Weiterbildung kann die Kopplungseinrichtung einen fest am Wickelkopf angeordneten Kopplungskörper sowie eine an der jeweiligen Wicklungsstütze ausgebildete Aussparung aufweisen, die in der Mantellinienrichtung durch zwei, einander zugewandte, ebene Führungsflächen begrenzt ist, die sich parallel zueinander und in Umfangsrichtung sowie senkrecht zur Mantelfläche erstrecken. Der Kopplungskörper ragt dabei senkrecht zur Mantelfläche in die Aussparung hinein und stützt sich mit Stützzonen in Mantellinienrichtung an den Führungsflächen ab. Durch diese Bauweise werden zwischen Wickelkopf und jeweiliger Wicklungsstütze gezielt zwei Freiheitsgrade bereit gestellt, nämlich für Relativbewegungen senkrecht zur Mantelfläche sowie in Umfangsrichtung. Im Unterschied dazu werden Relativbewegungen in Mantellinienrichtung durch die an den Führungsflächen anliegenden Stützzonen, also durch Formschluss verhindert. Die Bewegungsfreiheitsgrade zwischen Wickelkopf und jeweiliger Wicklungsstütze werden dadurch exakt in der gewünschten Weise definiert bzw. vorgegeben.

Bei einer Weiterbildung kann die Spanneinrichtung einen kernnahen Keil sowie einen kernfernen Keil aufweisen, die in Mantellinienrichtung verstellbar am Wickelkopf und an der jeweiligen Wicklungsstütze gelagert sind und die mittels eines Zugankers aufeinander zu verspannt sind, wobei sie die jeweilige Wicklungsstütze und den Wickelkopf senkrecht zur Mantelfläche voneinander weg antreiben. Mit Hilfe einer solchen Spanneinrichtung werden die mit dem Zuganker übertragenen und beispielsweise mit einer Druckfedereinrichtung erzeugten Kräfte über die Keile in Stützkräfte umgelenkt und dabei, je nach Keilform, übersetzt. Hierdurch ergibt sich einerseits eine gefederte Abstützung, die andererseits über die zweckmäßig geführten Keile im wesentlichen nur in einer Richtung, nämlich senkrecht zur Mantelfläche wirksam ist. Der Kopplungskörper enthält bei dieser Weiterbildung zweckmäßig eine Durchgangsöffnung, die sich in der Mantellinienrichtung erstreckt und durch die sich der Zuganker hindurch erstreckt. Hierdurch ergibt sich für den Zuganker zum einen eine Doppelfunktion, da er formschlüssig den Kopplungskörper am Wickelkopf sichert. Darüber hinaus ermöglicht diese Maßnahme eine besonders raumsparende, kompakte Bauweise. Mit Hilfe der Spanneinrichtungen kann der Wickelkopf bei einer entsprechenden radialen Abstützung radial und axial bzw. in Mantellinienrichtung verspannt werden.

Die vorgenannte Bauform wird bei einer Weiterbildung dadurch ausgenutzt, dass sich der Zuganker an seiner Außenseite über ein Dämpfermaterial an einer Innenseite der Durchgangsöffnung abstützt, wobei die Durchgangsöffnung insbesondere ein Rohr aus dem Dämpfermaterial enthalten kann, durch das sich der Zuganker hindurcherstreckt. Durch die vorgeschlagene, gedämpfte Abstützung des Zugankers am Kopplungskörper ergibt sich im Betrieb des Stators eine intensive Schwingungsdämpfung für den Zuganker, wodurch sich die Dauerhaltbarkeit der jeweiligen Spanneinrichtung verbessert und wobei gleichzeitig die von der Spanneinrichtung erzeugten Stützkräfte hinsichtlich hochfrequenter Störungen aufgrund der Schwingungen des Zugankers "geglättet" werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Es zeigen, jeweils schematisch,
- Fig. 1: einen vereinfachten Axialschnitt eines Stators im Bereich einer erfindungsgemäßen Abstützvorrichtung,
- Fig. 2: eine Ansicht wie in Fig. 1, jedoch bei einer vergrößerten Darstellung,
- Fig. 3: eine Seitenansicht auf einen Kopplungskörper.

### Wege zur Ausführung der Erfindung

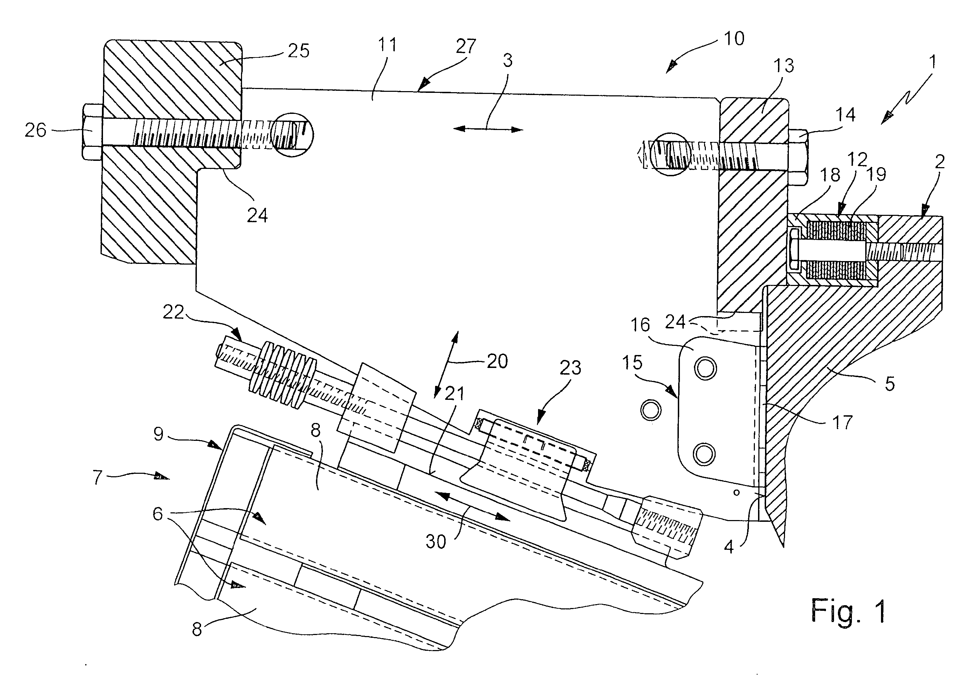

Entsprechend Fig. 1 umfasst ein nur teilweise dargestellter Stator 1, insbesondere ein Generatorstator eines im übrigen nicht dargestellten Generators, der beispielsweise bei einer Kraftwerksanlage zur Erzeugung elektrischer Energie Anwendung findet, einen ebenfalls nur bereichsweise dargestellten Kern 2, der in Fig. 1 so gezeigt ist, dass seine Längsmittelachse im wesentlichen horizontal verläuft. Dabei befindet sich die Längsmittelachse des Kerns 2 außerhalb der Zeichnungsfläche der Fig. 1, ist jedoch zur Veranschaulichung durch einen Doppelpfeil 3 symbolisiert, der parallel zur Längsmittelachse des Kerns 2 verläuft und somit die Axialrichtung repräsentiert.

Der Kern 2 besitzt eine axiale Stirnseite 4, die hier an einer Pressplatte 5 des Kerns 2 ausgebildet ist. Mit Hilfe von zwei solchen, an den beiden axialen Enden des Kerns 2 angeordneten Pressplatten 5 können dazwischen angeordnete, den Kern 2 aufbauende, hier nicht gezeigte Blechsegmente in axialer Richtung miteinander verspannt werden. Außerhalb der Zeichnungsfläche enthält der Kern 2 an seinen Innenumfang mehrere Längsnuten, in denen Wicklungsstäbe 6 einer Wicklung 7 untergebracht sind. Diese Wicklungsstäbe 6 sind mit ihren Enden 8 an der Stirnseite 4 des Kerns 2 in der Axialrichtung 3 aus dem Kern 2 herausgeführt und radial nach außen sowie in Umfangsrichtung des Stators 1 umgebogen, wodurch die Enden 8 der Wicklungsstäbe 6 eine Evolvente bilden. Die Enden 8 der Wicklungsstäbe 6 sind dabei so gebogen und insbesondere miteinander verbunden, dass sie einen Wickelkopf 9 bilden, der sich mit zunehmenden Abstand vom Kern 2 trichterförmig oder kegelförmig erweitert.

Damit die Wicklung 7 des Stators 1 bei dessen Betrieb die auftretenden elektrodynamischen Kräfte aufnehmen kann, muss die Wicklung 7 in der Axialrichtung 3 mit relativ großen Kräften vorgespannt werden. Zu diesem Zweck muss zunächst der Wickelkopf 9 in Umfangsrichtung verspannt werden, um eine Art tragendes Gewölbe für die Einleitung der axialen Kräfte in die sich axial erstreckenden Wicklungsstäbe 6 auszubilden. Zur Erzeugung dieser gewölbeartigen Verspannung kommt eine erfindungsgemäße Abstützvorrichtung 10 zur Anwendung, die mehrere Wicklungsstützen 11 aufweist. Diese Wicklungsstützen 11 sind hier dreieckig oder keilförmig ausgebildet und entlang der Stirnseite 4 des Kerns 2 in Umfangsrichtung, insbesondere symmetrisch, verteilt angeordnet.

Bei der hier gezeigten Ausführungsform kann - muss nicht - zumindest die hier gezeigte Wicklungsstütze 11 an der Stirnseite 4 des Kerns 2 bzw. am Kern über zumindest eine axial wirkende Druckfedereinrichtung 12 axial abgestützt sein. Zweckmäßig können sämtliche Wicklungsstützen 11 der Abstützvorrichtung 10 über mehrere derartige Druckfedereinrichtungen 12 am Kern 2 axial abgestützt sein. Dabei kann es durchaus sinnvoll sein, dass sich die einzelnen Druckfedereinrichtungen 12 nicht direkt an den Wicklungsstützen 11 abstützen, sondern an einem kernnahen Stützring 13, der sich seinerseits axial an den Wicklungsstützen 11 abstützt. Der kernnahe Stützring 13 erstreckt sich in Umfangsrichtung und ist geschlossen. Zweckmäßig ist der kernnahe Stützring 13 mit jeder Wicklungsstütze 11 fest verbunden, beispielsweise mittels einer Verschraubung 14. Es ist klar, dass die umfangsmäßige Verteilung der Wicklungsstützen 11 entlang des kernnahen Stützrings 13 nicht identisch aufgebaut sein muss, wie die umfangsmäßige Verteilung der Druckfedereinrichtungen 12 entlang des kernnahen Stützrings 13. Insbesondere kann die umfangsmäßige Positionierung der Wicklungsstützen 11 und der Druckfedereinrichtungen 12 voneinander abweichen. Ebenso kann die Anzahl der Druckfedereinrichtungen 12 von der Anzahl der Wicklungsstützen 11 abweichen.

Wichtig ist jedoch, dass bei der erfindungsgemäßen Abstützvorrichtung 10 grundsätzlich auf derartige Druckfedereinrichtungen 12 verzichtet werden kann.

Damit sich die Abstützvorrichtung bzw. die Wicklungsstützen 11 bzw. der kernnahe Stützring 13 axial vom Kern 2 entfernen können, müssen die Wicklungsstützen 11 bzw. die Abstützvorrichtung 10 so am Kern 2 angebracht bzw. gehaltert sein, dass er/sie davon in Axialrichtung 3 abhebbar ist/sind. Diese Anbindung an den Kern 2 erfolgt hier mit Hilfe wenigstens einer Blattfeder 15, die einerseits an der Wicklungsstütze 11 und andererseits am Kern 2 befestigt ist. Zweckmäßig ist auf jeder Seite der Wicklungsstütze 11 eine solche Blattfeder 15 angebracht. Die Blattfedern 15 können die Abstützvorrichtung 10 bzw. die jeweilige Wicklungsstütze 11 gegen den Kern 2 ziehen und/oder - je nach Montage - auch vom Kern 2 wegstoßen. Beispielsweise sind die Blattfedern 15 bei der Montage gegen den Kern 2 vorgespannt, so dass sie sich im Betrieb idealerweise in einem neutralen Zustand befinden. Die Blattfedern 15 verhindern außerdem eine Verstellung oder ein Kippen der jeweiligen Wicklungsstütze 11 in Umfangsrichtung. Die Anziehungskräfte der Blattfeder 15 sind dabei relativ klein.

Die Blattfeder 15 kann beispielsweise einen ersten Schenkel 16 aufweisen, der an der Wicklungsstütze 11 befestigt ist, sowie einen zweiten Schenkel 17, der am Kern 2 stirnseitig befestigt ist. Zwischen der Anbindung des zweiten Schenkels 17 an den Kern 2 und dem ersten Schenkel 6 kann die Blattfeder 15 so geformt sein, dass sie die gewünschte Federwirkung erzeugt. Beispielsweise kann die Blattfeder 15 in dem genannten Abschnitt einen Ω-förmigen Querschnitt besitzen.

Die Druckfedereinrichtung 12 kann beispielsweise bei der hier gezeigten Ausführungsform einen Kolben 18 aufweisen, der mit einem Tellerfederpaket 19 in der Axialrichtung 3 angetrieben ist.

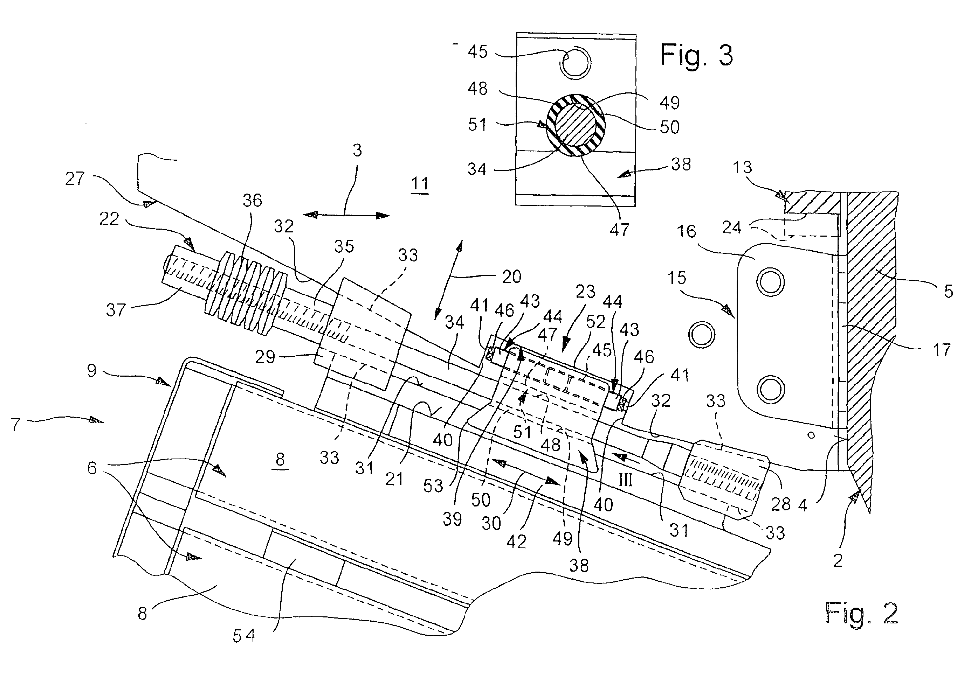

Die Wicklungsstützen 11 stützen sich radial innen direkt oder indirekt am Wickelkopf 9 ab und zwar in einer Richtung 20, die im wesentlichen senkrecht zu einer Mantelfläche 21 des Wickelkopfs 9 verläuft. Die Abstützung erfolgt somit im wesentlichen radial, besitzt jedoch auch eine axiale Komponente. Zumindest die hier gezeigte Wicklungsstütze 11 stützt sich indirekt am Wickelkopf 9 ab, und zwar über eine Spanneinrichtung 22. Es ist klar, dass zweckmäßig mehrere, insbesondere alle, Wicklungsstützen 11 über jeweils eine solche Spanneinrichtung 22 am Wickelkopf 9 abgestützt sind. Desweiteren ist zwischen dem Wickelkopf 9 und der hier gezeigten Wicklungsstütze 11 eine Kopplungseinrichtung 23 ausgebildet. Auch hier ist es zweckmäßig, mehreren, insbesondere allen, Wicklungsstützen 11 eine derartige Kopplungseinrichtung 23 zuzuordnen. Die Spanneinrichtung 22 und die Kopplungseinrichtung 23 werden weiter unten mit Bezug auf Fig. 2 näher erläutert.

Wie bereits weiter oben erläutert, sind sämtliche Wicklungsstützen 11 über den kernnahen Stützring 13 untereinander verbunden. Darüber hinaus sind die Wicklungsstützen 11 am kernnahen Stützring 13 nach radial außen abgestützt. Zu diesem Zweck wirken entsprechend geformte Abstützflächen 24 zusammen, die in geeigneter Weise am kernnahen Stützring 13 sowie an der jeweiligen Wicklungsstütze 11 ausgebildet sind. Durch den geschlossenen kernnahen Stützring 13 können die Wicklungsstützen 11 radial nach außen nicht ausweichen.

Bei der hier gezeigten Ausführungsform ist außerdem ein kernferner Stützring 25 vorgesehen, der sich ebenfalls in Umfangsrichtung und vollständig geschlossen erstreckt und an dem sich die Wicklungsstützen 11 ebenfalls in radialer Richtung nach außen abstützen können. In entsprechender Weise sind auch zwischen den Wicklungsstützen 11 und dem kernfernen Stützring 25 wieder geeignete Abstützflächen 24 ausgebildet. Darüber hinaus ist auch der kernferne Stützring 25 beispielsweise jeweils über eine geeignete Verschraubung 26 mit den Wicklungsstützen 11 fest verbunden. Somit sind die Wicklungsstützen 11 auch an ihrem kernfernen Ende radial nach außen abgestützt.

Insgesamt bilden die Wicklungsstützen 11 und die Stützringe 13, 25 einen in radialer Richtung extrem steifen Stützkäfig 27, der zur Verspannung der Wicklung 7 des Stators 1 am Wickelkopf 9 abgestützt ist. Dieser Stützkäfig 27 bewirkt zum einen eine intensive radiale bzw. senkrecht zur Mantelfläche 21 orientierte Druckbelastung des Wickelkopfs 9, wodurch dieser ein tragendes und auf Zug in Axialrichtung 3 belastbares Gewölbe bildet. Die axiale und radiale Verspannung des Wickelkopfes 9 wird dabei mit Hilfe der Spanneinrichtung 22 erreicht. Von besonderer Bedeutung ist hierbei, dass der Stützkäfig 27 relativ zum Kern 2 in Axialrichtung 3 beweglich gehaltert ist, nämlich über die Blattfedern 15. Hierdurch kann der Stützkäfig 27 Axialbewegungen des Wickelkopfs 9 folgen, die dieser relativ zum Kern 2, beispielsweise in Folge thermischer Ausdehnungseffekte, durchführt.

Entsprechend Fig. 2 umfasst die Spanneinrichtung 22 einen kernnahen Keil 28 sowie einen kernfernen Keil 29. Beide Keile 28, 29 stützen sich auf einer dem Wickelkopf 9 zugewandten Seite an einer geradlinigen, parallel zu einer Mantellinienrichtung 30 erstreckenden Kopfschiene 31 ab. Dem gegenüber stützen sie sich an einer der jeweiligen Wicklungsstütze 11 zugewandten Seite jeweils an einer rampenförmigen oder keilförmigen Stützenschiene 32 ab. Die Stützenschienen 32 der beiden Keile 28, 29 sind dabei so orientiert, dass sie aufeinander zu in Richtung Wickelkopf 9 ansteigen. Die Keile 28, 29 besitzen zu den Kopfschienen 31 und zu den Stützschienen 32 komplementäre Gleitflächen 33.

Die Spanneinrichtung 22 besitzt außerdem einen Zuganker 34, der im kernnahen Keil 28 fest verankert ist. Auf den Zuganker 34 ist eine Druckhülse 35 aufgesteckt, die sich auf einer vom kernnahen Keil 28 abgewandten Seite am kernfernen Keil 29 abstützt. Die Druckhülse 35 ist an einem vom kernfernen Keil 29 abgewandten Ende mit einer Druckfedereinrichtung 36, die hier durch ein Tellerfederpaket gebildet ist, mit einer relativ großen Druckkraft beaufschlagt. Die Druckfedereinrichtung 36 ist an ihrer von der Druckhülse 35 abgewandten Seite an einer Mutter 37 abgestützt, die auf den Zuganker 34 aufgeschraubt ist. Der kernferne Keil 29 und die Druckhülse 35 sind entlang des Zugankers 34 verschiebbar angeordnet. Der Zuganker 34 erstreckt sich parallel zur Mantellinienrichtung 30. Die Druckfedereinrichtung 36 erzeugt eine Verspannung der beiden Keile 28, 29, welche die beiden Keile 28, 29 aufeinander zu antreibt. Diese in der Mantellinienrichtung 30 wirksame Verspannung wird über die Keile 28, 29 auf die Wicklungsstütze 11 übertragen und dabei in eine senkrecht zur Mantelfläche 21 wirksame Druckkraft oder Stützkraft übertragen, mit der sich die Wicklungsstützen 11 über die Keile 28, 29 am Wickelkopf 9 abstützen. Durch die Keilwirkung kann sich dabei eine relativ große Kraftübersetzung ausbilden, so dass mit relativ klein dimensionierten Druckfedereinrichtungen 36 vergleichsweise große Stützkräfte erzielt werden können, mit denen der Stützkäfig 27 den Wickelkopf 9 verspannt. Die Spanneinrichtung 22 kann dabei thermische Wärmedehnungseffekte oder Setzerscheinungen des Wickelkopfes 9 ausgleichen, in dem sich die Keile 28, 29 bei einer Vergrößerung des Abstands zwischen Wickelkopf 9 und jeweiliger Wicklungsstütze 11 angetrieben durch die Druckfedereinrichtung 36 aufeinander zu verstellen und bei abnehmendem Abstand zwischen Wickelkopf 9 und zugehöriger Wicklungsstütze 11 entgegen der Druckkraft der Druckfedereinrichtung 36 voneinander wegbewegen.

Erfindungswesentliche Bedeutung hat nun die Kopplungseinrichtung 23, die so ausgestaltet ist, dass sie Relativbewegungen zwischen dem Wickelkopf 9 und der zugehörige Wicklungsstütze 11 in der Umfangsrichtung des Wickelkopfs 9 sowie senkrecht zur Mantelfläche 21 des Wickelkopfs 9 zuläßt, während sie Relativbewegungen zwischen Wickelkopf 9 und jeweiliger Wicklungsstütze 11 in der Mantellinienrichtung 30 verhindert. In der Praxis hat sich gezeigt, dass mit Hilfe einer derartigen Kopplung zum einen unerwünschte Verspannungen zwischen den einzelnen Wicklungsstützen 11 und dem Wickelkopf 9 in Umfangsrichtung vermieden werden können. Zum anderen gewährleistet die Beweglichkeit senkrecht zur Mantelfläche 21 die ordnungsgemäße Funktion der Spanneinrichtung 22. Darüber hinaus bewirkt die in der Mantellinienrichtung 30 wirksame Zwangskopplung zwischen Wickelkopf 9 und Wicklungsstütze 11, dass der Stützkäfig 27 und der Wickelkopf 9 bezüglich der Axialrichtung 3 stets in derselben Relativlage zueinander positioniert sind. Hierdurch kann die ordnungsgemäße und optimale Funktionsweise des Stützkäfigs 27 gewährleistet werden. Mit Hilfe der Kopplungseinrichtung 23 wird zum einen erreicht, dass der Stützkäfig 27 bei einer Wärmedehnung der Wicklung 7 des Stators 1 dem Wickelkopf 9 folgen kann, wenn dieser sich vom Kern 2 entfernt. Zum anderen gewährleistet die Zwangskopplung mittels der Kopplungseinrichtung 23 auch ein Zurückverstellen des Stützkäfigs 27, wenn sich der Wickelkopf 9 beim Abkühlen der Wicklung 7 wieder dem Kern 2 nähert. Durch diese Bauweise wird gewährleistet, dass Relativverstellungen zwischen Wickelkopf 9 und Kern 2 des Stators 1 keinen oder nur einen geringfügigen Einfluss auf die Verspannung des Wickelkopfs 9 haben.

Bei der hier gezeigten, bevorzugten Ausführungsform umfasst die Kopplungseinrichtung 23 einen Kopplungskörper 38 sowie eine Ausnehmung 39. Die Ausnehmung 39 ist an einer dem Wickelkopf 9 zugewandten Unterseite der jeweiligen Wicklungsstütze 11 ausgebildet. Die Ausnehmung 39 besitzt zwei Führungsflächen 40, welche die Ausnehmung 39 in der Mantellinienrichtung 30 begrenzen, einander zugewandt und eben ausgebildet sind. Die ebenen Führungsflächen 40 erstrecken sich dabei parallel zueinander und senkrecht zur Mantelfläche 21 sowie in Umfangsrichtung.

Der Kopplungskörper 38 ist relativ zum Wickelkopf 9 ortsfest angeordnet, steht senkrecht zur Mantelfläche 21 vom Wickelkopf 9 ab und ragt in dieser Richtung 20 in die Ausnehmung 39 hinein. Innerhalb der Ausnehmung 39 stützt sich der Kopplungskörper 38 über Stützzonen 41 in der Mantellinienrichtung 30 an den Führungsflächen 40 ab. Insoweit ergibt sich eine formschlüssige Abstützung zwischen Kopplungskörper 38 und Ausnehmung 39. Da die Führungsflächen 40 an der Wicklungsstütze 11 ausgebildet sind, ergibt sich hierdurch eine formschlüssige Kopplung zwischen der Wicklungsstütze 11 und dem Wickelkopf 9.

Bei der hier gezeigten, bevorzugten Ausführungsform bildet der Kopplungskörper 38 ein separates Bauteil, das am Wickelkopf 9 verankert ist. Der Wickelkopf 9 weist zu diesem Zweck ein Bauteil 42 auf, das fest mit den Enden 8 der Wicklungsstäbe 6 verbunden ist. Zweckmäßig ist dieses Bauteil eine äußere Verspannplatte 42, welche den Wickelkopf 9 radial nach außen begrenzt und die üblicherweise mit einer radial innen am Wickelkopf 9 angeordneten inneren Verspannplatte (nicht gezeigt) verspannt ist, wobei die äußeren und die inneren Verspannplatten die dazwischen liegenden Enden 8 der Wicklungsstäbe 6 zwischen sich einspannen. Zweckmäßig kann radial zwischen den Enden 8 der Wicklungsstäbe 6 eine mittlere Verspannplatte 54 angeordnet sein, welche den verspannten Wicklungskopf 9 zusätzlich aussteift.

Zweckmäßig ist demnach der Kopplungskörper 38 an einer der äußeren Verspannplatten 42 befestigt. Zur Verankerung des Kopplungskörpers 38 am Wickelkopf 9 bzw. hier an der äußeren Verspannplatte 42 kann eine Formschlußkopplung 53, insbesondere eine Schwalbenschwanzkopplung vorgesehen sein. Durch diese Bauweise können zum einen besonders große Kräfte übertragen werden.

Zum anderen wird die Montage des Kopplungskörpers 38 dadurch vereinfacht. Darüber hinaus kann durch eine derartige Formschlußkopplung 53, insbesondere mittels einer solchen Schwalbenschwanzkopplung eine vergleichsweise gleichmäßige Kraftübertragung zwischen Kopplungskörper 38 und Wickelkopf 9 bzw. Verspannplatte 42 erzielt werden, wodurch sich Spannungsspitzen vermeiden lassen.

Obwohl bei der hier gezeigten Ausführungsform der Kopplungskörper 38 als separates oder separierbares Bauteil ausgebildet ist, kann er bei einer anderen Ausführungsform grundsätzlich auch unlösbar mit dem Wickelkopf 9 bzw. mit der Verspannplatte 42 verbunden sein, beispielsweise mittels einer Schweißverbindung. Ebenso ist es möglich, den Kopplungskörper 38 einstückig an einem entsprechenden Bauteil, z.B. äußere Verspannplatte 42, des Wickelkopfs 9 auszubilden.

Bei der hier gezeigten Ausführungsform sind die Stützzonen 41 nicht direkt am Kopplungskörper 38, sondern jeweils an einem Schraubbolzenende 43 eines Schraubbolzens 44 ausgebildet, wobei der jeweilige Schraubbolzen 44 in eine komplementäre Gewindeöffnung 45, die im Kopplungskörper 38 ausgebildet ist, eingeschraubt ist. Die Gewindeöffnung 45 ist dabei parallel zur Mantellinienrichtung 30 orientiert. Dementsprechend erstrecken sich auch die Schraubbolzen 44 in der Mantellinienrichtung 30. Die Schraubbolzenenden 43 stehen bezüglich der Mantellinienrichtung 30 an beiden Enden des Kopplungskörpers 38 über diesen aus der Gewindeöffnung 45 vor. Die Stützzonen 41 sind zweckmäßig als ebene Flächen ausgestaltet, um die Flächenbelastung zwischen Stützzonen 41 und Führungsflächen 40 zu reduzieren.

Alternativ zu zwei einzelnen Schraubbolzen 44 kann bei einer anderen Ausführungsform auch ein durchgehender Schraubbolzen 44 vorgesehen sein, der an beiden Schraubbolzenenden 43 aus der Gewindeöffnung 45 hervorsteht und jeweils eine Stützzone 41 aufweist. Die Gewindeöffnung 45 ist dabei zweckmäßig als Durchgangsöffnung ausgebildet. Des Weiteren ist es auch möglich, den Kopplungskörper 38 mit mehr als einer Gewindeöffnung 45 auszustatten, die dann auf entsprechende Weise mit einem oder mit zwei Schraubbolzen 44 bestückt sind.

Die Schraubbolzen 44 sind an ihren Schraubbolzenenden 43 jeweils mit einem Außenmehrkant 46 versehen, der es ermöglicht, mit einem geeigneten Werkzeug ein Drehmoment in den jeweiligen Schraubbolzen 44 einzuleiten. Das Drehmoment dient dabei zum Erzeugen einer Schraubbewegung. Zum einen kann dadurch die Relativlage des Kopplungskörpers 38 innerhalb der Ausnehmung 39 optimal justiert werden. Sofern zwei einzelne Schraubbolzen 44 verwendet werden, können außerdem Herstellungstoleranzen ausgeglichen werden. Beispielsweise werden die Schraubbolzen 44 mit einem vorbestimmten Drehmoment gegen die Führungsflächen 40 verspannt.

In den Fig. 2 und 3 ist eine bevorzugte Ausführungsform des Kopplungskörpers 38 gezeigt, der mit einer Durchgangsöffnung 47 ausgestattet ist. Diese Durchgangsöffnung 47 erstreckt sich im montierten Zustand parallel zur Mantellinienrichtung 30. Zweckmäßig sind nun die Positionierungen des Kopplungskörpers 38 und der Spanneinrichtung 22 so aufeinander abgestimmt, dass der Zuganker 34 den Kopplungskörper 38 in der Durchgangsöffnung 47 durchdringt. Der Kopplungskörper 38 ist dadurch bei montierter Spanneinrichtung 22 verliersicher am Wickelkopf 9 fixiert.

Vorteilhafterweise ist nun radial zwischen einer Außenseite 48 des Zugankers 34 und einer Innenseite 49 der Durchgangsöffnung 47 ein Dämpfermaterial 50 angeordnet. Die Dimensionierung erfolgt dabei so, dass sich der Zuganker 34 über das Dämpfermaterial 50 am Kopplungskörper 38 abstützt. Hierdurch können Schwingungen, zu denen der Zuganker 34 im Betrieb des Stators 1 angeregt wird, bedämpft werden. Die ordnungsgemäße Funktion der Spanneinrichtung 22 wird dadurch verbessert. Zweckmäßig ist in die Durchgangsöffnung 47 ein Rohr 51 eingesteckt, das aus dem Dämpfermaterial 50 besteht und durch das sich dann der Zuganker 34 hindurcherstreckt. Das Rohr 51 kann zweckmäßig an der Innenseite 49 der Durchgangsöffnung 47 befestigt sein, beispielsweise durch Anspritzen, Anschweißen oder Anvulkanisieren. Zweckmäßig besteht das Dämpfermaterial 50 aus einem Gummi oder aus einem Kunststoff, insbesondere auf Silikonbasis. Die anderen, miteinander zusammenwirkenden Komponenten, insbesondere die äußere Verspannplatte 42, der Kopplungskörper 38, die Schraubbolzen 44 und die Wicklungsstütze 11 bestehen zweckmäßig aus einem hochfesten Stahl, z.B. vom HGW-Typ.

Senkrecht zur Mantelfläche 21 verbleibt zwischen dem Kopplungskörper 38 und der Ausnehmung 39 ein Spalt 52, der hinreichend groß dimensioniert ist, so dass bei allen tolerierbaren Relativbewegungen zwischen Wickelkopf 9 und Wicklungsstütze 11 in dieser Richtung 20 kein direkter Kontakt zwischen Wicklungsstütze 11 und Kopplungskörper 38 entsteht.

Die vorgeschlagene Formschlußkopplung 53, also hier die Schwalbenschwanzkopplung ist dabei tangential bezüglich der Mantelfläche 21 ausgerichtet, so dass der Kopplungskörper 38 in Richtung einer Tangente auf die äußere Verspannplatte 42 aufgesteckt werden kann. Zu diesem Zweck wird die Spanneinrichtung 22 soweit demontiert, dass der Zuganker 34 entfernbar ist. Vorteilhaft ist dabei, dass die Spanneinrichtung 22 nicht vollständig entfernt werden muss, um die Kopplungseinrichtung 23 zu montieren bzw. zu demontieren.

Bei der Herstellung der Wicklung 7 des Stators 1 werden die Isolationen der einzelnen Wicklungsstäbe 6 miteinander polymerisiert. Während dieser Polymerisation ist es zweckmäßig, den Wickelkopf 9 bereits mit Hilfe des Stützkäfigs 27 radial zu verspannen. Während der Polymerisation können sich dann die einzelnen Wicklungsstäbe 6 noch relativ zueinander bewegen, wodurch innere Spannungen abgebaut werden. Vorteilhaft ist während dieser Polymerisation die Kopplungseinrichtung 23 noch nicht aktiviert. Beispielsweise ist der Kopplungskörper 38 während der Polymerisation der Wicklung 7 noch nicht eingebaut. Hierdurch werden für die Polymerisation Relativbewegungen in der Mantellinienrichtung 30 zwischen Wicklungsstützen 11 und Wickelkopf 9 ermöglicht.

### Bezugszeichenliste

- 1: Stator
- 2: Kern
- 3: Axialrichtung
- 4: Stirnseite von 2
- 5: Preßplatte
- 6: Wicklungsstab
- 7: Wicklung von 1
- 8: Ende von 6
- 9: Wickelkopf
- 10: Abstützvorrichtung
- 11: Wicklungsstütze
- 12: Druckfedereinrichtung
- 13: kernnaher Stützring
- 14: Verschraubung
- 15: Blattfeder
- 16: erster Schenkel von 15
- 17: zweiter Schenkel von 15
- 18: Kolben
- 19: Tellerfederpaket
- 20: Richtung senkrecht zu 21
- 21: Mantelfläche von 9
- 22: Spanneinrichtung
- 23: Kopplungseinrichtung
- 24: Abstützfläche
- 25: kernferner Stützring
- 26: Verschraubung
- 27: Stützkäfig
- 28: kernnaher Keil
- 29: kernferner Keil
- 30: Mantellinienrichtung
- 31: Kopfschiene
- 32: Stützschiene
- 33: Gleitfläche
- 34: Zuganker
- 35: Druckhülse
- 36: Druckfedereinrichtung
- 37: Mutter
- 38: Kopplungskörper
- 39: Ausnehmung
- 40: Führungsfläche
- 41: Stützzone
- 42: Bauteil von 9/äußere Verspannplatte
- 43: Schraubbolzenende
- 44: Schraubbolzen
- 45: Gewindeöffnung
- 46: Außenmehrkant
- 47: Durchgangsöffnung
- 48: Außenseite von 34
- 49: Innenseite von 47
- 50: Dämpfermaterial
- 51: Rohr
- 52: Spalt
- 53: Formschlußkopplung/Schwalbenschwanzkopplung
- 54: Verspannplatte, mittlere

## Patentansprüche

1. Vorrichtung zum Abstützen einer Wicklung (7) eines Stators (1), insbesondere eines Generatorstators einer Kraftwerksanlage,
- wobei die Wicklung (7) mehrere Wicklungsstäbe (6) aufweist, die zumindest an einer axialen Stirnseite (4) eines Kerns (2) des Stators (1) mit ihren axial aus dem Kern (2) herausgeführten Enden (8) einen sich trichterförmig erweiternden Wickelkopf (9) bilden,
- wobei die Abstützvorrichtung (10) mehrere Wicklungsstützen (11) aufweist, die an der Stirnseite (4) des Kerns (2) bezüglich des Wickelkopfs (9) umfangsmäßig verteilt angeordnet sind und sich axial an der Stirnseite (4) des Kerns (2) und im wesentlichen senkrecht am Wickelkopf (9) abstützen,
- wobei wenigstens einer der Wicklungsstützen (11) eine Spanneinrichtung (22) zugeordnet ist, die zwischen dem Wickelkopf (9) und der jeweiligen Wicklungsstütze (11) angeordnet ist und die eine Stützkraft erzeugt, mit welcher sich die jeweilige Wicklungsstütze (11) über die Spanneinrichtung (22) am Wickelkopf (9) abstützt,
**dadurch gekennzeichnet,**
**dass** wenigstens einer der Wicklungsstützen (11) eine Kopplungseinrichtung (23) zugeordnet ist, die zwischen dem Wickelkopf (9) und der jeweiligen Wicklungsstütze (11) ausgebildet ist und die Relativbewegungen zwischen dem Wickelkopf (9) und der jeweiligen Wicklungsstütze (11) in Umfangsrichtung des Wickelkopfs (9) und senkrecht zu einer Mantelfläche (21) des Wickelkopfs (9) ermöglicht und in einer Mantellinienrichtung (30) des Wickelkopfs (9) verhindert.

2. Abstützvorrichtung nach Anspruch 1, **dadurch gekennzeichnet,**
- **dass** die Kopplungseinrichtung (23) einen fest am Wickelkopf (9) angeordneten Kopplungskörper (38) und eine an der jeweiligen Wicklungsstütze (11) ausgebildete Ausnehmung (39) aufweist,
- **dass** die Ausnehmung (39) in der Mantellinienrichtung (30) durch zwei einander zugewandte ebene Führungsflächen (40) begrenzt ist, die sich parallel zueinander und in Umfangsrichtung sowie senkrecht zur Mantelfläche (21) erstrecken,
- **dass** der Kopplungskörper (38) senkrecht zur Mantelfläche (21) in die Ausnehmung (39) hineinragt und sich mit Stützzonen (41) in Mantellinienrichtung (30) an den Führungsflächen (40) abstützt.

3. Abstützvorrichtung nach Anspruch 2, **dadurch gekennzeichnet,**
- **dass** die Kopplungseinrichtung (23) wenigstens einen Schraubbolzen (44) aufweist, der in eine sich im Kopplungskörper (38) in der Mantellinienrichtung (30) erstreckende Gewindeöffnung (45) eingeschraubt ist,
- **dass** an einem aus der Gewindeöffnung (45) vorstehenden Schraubbolzenende (43) eine der Stützzonen (41) ausgebildet ist.

4. Abstützvorrichtung nach Anspruch 3, **dadurch gekennzeichnet,**
- **dass** die Gewindeöffnung (45) als Durchgangsöffnung ausgebildet ist,
- **dass** auf jeder Seite der Gewindeöffnung (45) ein Schraubbolzenende (43) vorsteht, an dem jeweils eine der Stützzonen (41) ausgebildet ist.

5. Abstützvorrichtung nach Anspruch 4, **dadurch gekennzeichnet,**
- **dass** in die Gewindeöffnung (45) zwei Schraubbolzen (44) eingeschraubt sind, die mit ihren Schraubbolzenenden (43) an gegenüberliegenden Seiten aus der Gewindeöffnung (45) vorstehen, oder
- **dass** in die Gewindeöffnung (45) ein einziger Schraubbolzen (44) eingeschraubt ist, der mit seinen Schraubbolzenenden (43) an gegenüberliegenden Seiten aus der Gewindeöffnung (45) vorsteht.

6. Abstützvorrichtung nach einem der Ansprüche 3 bis 5, **dadurch gekennzeichnet, dass** jeder Schraubbolzen (44) an seinem, aus der Gewindeöffnung (45) vorstehenden Schraubbolzenende (43) einen zur Einleitung eines Schraubmoments geeigneten Außenmehrkant (46) aufweist.

7. Abstützvorrichtung nach einem der Ansprüche 2 bis 6, **dadurch gekennzeichnet,**
- **dass** der Wickelkopf (9) wenigstens eine äußere Verspannplatte (42) und wenigstens eine innere Verspannplatte aufweist, zwischen denen die Enden (8) der Wicklungsstäbe (6) verspannt sind,
- **dass** der Kopplungskörper (38) an einer der äußeren Verspannplatten (42) fest angeordnet ist.

8. Abstützvorrichtung nach einem der Ansprüche 2 bis 7, **dadurch gekennzeichnet, dass** der Kopplungskörper (38) durch eine Formschlußkopplung (53), insbesondere durch eine Schwalbenschwanzkopplung (53), am Wickelkopf (9) befestigt ist.

9. Abstützvorrichtung nach einem der Ansprüche 2 bis 8, **dadurch gekennzeichnet,**
- **dass** die Spanneinrichtung (22) einen kernnahen Keil (28) und einen kernfernen Keil (29) aufweist, die in Mantellinienrichtung (30) verstellbar am Wickelkopf (9) und an der jeweiligen Wicklungsstütze (11) gelagert sind und die mittels eines sich in Mantellinienrichtung (30) erstreckenden Zugankers (34) aufeinander zu verspannt sind, wobei sie die jeweilige Wicklungsstütze (11) und den Wickelkopf (9) senkrecht zur Mantelfläche (21) voneinander weg antreiben,
- **dass** der Kopplungskörper (38) eine Durchgangsöffnung (47) enthält, die sich in der Mantellinienrichtung (30) erstreckt,
- **dass** sich der Zuganker (34) durch die Durchgangsöffnung (47) hindurcherstreckt.

10. Abstützvorrichtung nach Anspruch 9, **dadurch gekennzeichnet, dass** sich der Zuganker (34) an seiner Außenseite (48) über ein Dämpfermaterial (50) an einer Innenseite (49) der Durchgangsöffnung (47) abstützt.

11. Abstützvorrichtung nach Anspruch 9 oder 10, **dadurch gekennzeichnet, dass** die Durchgangsöffnung (47) ein Rohr (51) aus einem Dämpfermaterial (50) enthält, durch das sich der Zuganker (34) hindurch erstreckt.

12. Abstützvorrichtung nach einem der Ansprüche 1 bis 11, **dadurch gekennzeichnet, dass** die Wicklungsstützen (11) mittels wenigstens eines sich in Umfangsrichtung erstreckenden, geschlossenen Stützrings (13, 25) miteinander verbunden und radial außen abgestützt sind.

13. Abstützvorrichtung nach einem der Ansprüche 1 bis 12, **dadurch gekennzeichnet, dass** die Abstützvorrichtung (10) axial elastisch an der Stirnseite (4) des Kerns (2) gehaltert ist.

## Claims

1. Apparatus for supporting a winding (7) on a stator (1), in particular on a generator stator in a power station,
- with the winding (7) having two or more winding bars (6) whose ends (8) which pass axially out of the core (2) form an end winding (9) which widens in the form of a funnel on at least one axial end face (4) of a core (2) of the stator (1),
- with the supporting apparatus (10) having two or more winding supports (11) which are arranged distributed circumferentially with respect to the end winding (9) on the end face (4) of the core (2) and are supported axially on the end face (4) of the core (2) and essentially at right angles to the end winding (9),
- with at least one of the winding supports (11) being associated with a stressing device (22) which is arranged between the end winding (9) and the respective winding support (11) and produces a supporting force by means of which the respective winding support (11) is supported on the end winding (9) via the stressing device (22),
**characterized in that**
at least one of the winding supports (11) has an associated coupling device (23) which is formed between the end winding (9) and the respective winding support (11), allows relative movements between the end winding (9) and the respective winding support (11) in the circumferential direction of the end winding (9) and at right angles to an envelope surface (21) of the end winding (9), and prevents such relative movements in an envelope line direction (30) of the end winding (9).

2. Supporting apparatus according to Claim 1,
**characterized**
- **in that** the coupling device (23) has a coupling body (38) which is arranged firmly on the end winding (9), and has a recess (39) which is formed on the respective winding support (11),
- **in that** the recess (39) is bounded in the envelope line direction (30) by two mutually facing planar guide surfaces (40) which extend parallel to one another and in the circumferential direction, and at right angles to the envelope surface (21),
- **in that** the coupling body (38) projects at right angles to the envelope surface (21) into the recess (39) and is supported by supporting zones (41) in the envelope line direction (30) on the guide surfaces (40).

3. Supporting apparatus according to Claim 2,
**characterized**
- **in that** the coupling device (23) has at least one threaded bolt (44), which is screwed into a threaded opening (45) which extends in the envelope line direction (30) in the coupling body (38),
- **in that** one of the supporting zones (41) is formed on a threaded bolt end (43) which projects out of the threaded opening (45).

4. Supporting apparatus according to Claim 3,
**characterized**
- **in that** the threaded opening (45) is in the form of a through opening,
- **in that** a threaded bolt end (43) projects on each side of the threaded opening (45) and one of the supporting zones (41) is formed on each threaded bolt end (43).

5. Supporting apparatus according to Claim 4,
**characterized**
- **in that** two threaded bolts (44) are screwed into the threaded opening (45) and their threaded bolt ends (43) project out of the threaded opening (45) on opposite sides, or
- **in that** a single threaded bolt (44) is screwed into the threaded opening (45) and its threaded bolt ends (43) project out of the threaded opening (45) on opposite sides.

6. Supporting apparatus according to one of Claims 3 to 5, **characterized**
**in that**, at its threaded bolt end (43) which projects out of the threaded opening (45), each threaded bolt (44) has an external polygonal shape (46) which is suitable for the introduction of a screwing torque.

7. Supporting apparatus according to one of Claims 2 to 6, **characterized**
- **in that** the end winding (9) has at least one outer bracing plate (42) and at least one inner bracing plate, between which the ends (8) of the winding bars (6) are braced,
- **in that** the coupling body (38) is arranged fixed on one of the outer bracing plates (42).

8. Supporting apparatus according to one of Claims 2 to 7, **characterized in that** the coupling body (38) is attached to the end winding (9) by means of an interlocking coupling (53), in particular by means a dovetail coupling (53).

9. Supporting apparatus according to one of Claims 2 to 8, **characterized**
- **in that** the stressing device (22) has a wedge (28) that is close to the core and a wedge (29) that is remote from the core, which are mounted on the end winding (9) and on the respective winding support (11) such that they can move in the envelope line direction (30), and which are braced with respect to one another by means of a tie rod (34) which extends in the envelope line direction (30), the wedges driving the respective winding support (11) and the end winding (9) away from one another at right angles to the envelope surface (21),
- **in that** the coupling body (38) contains a through-opening (47) which extends in the envelope line direction (30), and
- **in that** the tie rod (34) passes through the through-opening (47).

10. Supporting apparatus according to Claim 9, **characterized in that** the outer face (48) of the tie rod (34) is supported via a damping material (50) on an inner face (49) of the through-opening (47).

11. Supporting apparatus according to Claim 9 or 10, **characterized in that** the through-opening (47) contains a tube (51) composed of a damping material (50), through which the tie rod (34) extends.

12. Supporting apparatus according to one of Claims 1 to 11, **characterized in that** the winding supports (11) are connected to one another and are supported radially on the outside by means of at least one closed supporting ring (13, 25) which extends in the circumferential direction.

13. Supporting apparatus according to one of Claims 1 to 12, **characterized in that** the supporting apparatus (10) is held in an axially elastic manner on the end face (4) of the core (2).

## Revendications

1. Dispositif pour soutenir un enroulement (7) d'un stator (1), notamment d'un stator de générateur d'une installation de production d'énergie,
- l'enroulement (7) présentant plusieurs barres d'enroulement (6) qui forment, au moins sur un côté frontal axial (4) d'un noyau (2) du stator (1), avec leurs extrémités (8) sortant axialement du noyau (2), une tête d'enroulement (9) s'élargissant en forme d'entonnoir,
- le dispositif de soutien (10) présentant plusieurs supports d'enroulement (11) qui sont répartis sur la périphérie au niveau du côté frontal (4) du noyau (2) par rapport à la tête d'enroulement (9) et qui s'appuient axialement sur le côté frontal (4) du noyau (2) et essentiellement perpendiculairement à la tête d'enroulement (9),
- à au moins l'un des supports d'enroulement (11) étant associé un dispositif de serrage (22) qui est disposé entre la tête d'enroulement (9) et le support d'enroulement respectif (11) et qui produit une force de support avec laquelle le support d'enroulement respectif (11) s'appuie par le biais du dispositif de serrage (22) contre la tête d'enroulement (9),
**caractérisé en ce que**
l'on associe à au moins l'un des supports d'enroulement (11) un dispositif d'accouplement (23) qui est réalisé entre la tête d'enroulement (9) et le support d'enroulement respectif (11) et qui permet des mouvements relatifs entre la tête d'enroulement (9) et le support d'enroulement respectif (11) dans la direction périphérique de la tête d'enroulement (9) et perpendiculairement à une surface d'enveloppe (21) de la tête d'enroulement (9) et qui les empêche dans une direction de la génératrice (30) de la tête d'enroulement (9).

2. Dispositif de soutien selon la revendication 1,
**caractérisé en ce que**
- le dispositif d'accouplement (23) présente un corps d'accouplement (38) disposé fixement sur la tête d'enroulement (9) et un évidement (39) réalisé sur le support d'enroulement (11) respectif,
- l'évidement (39) est limité dans la direction de la génératrice (30) par deux faces de guidage planes (40) en regard l'une de l'autre qui s'étendent parallèlement l'une à l'autre et dans la direction périphérique ainsi que perpendiculairement à la surface d'enveloppe (21),
- le corps d'accouplement (38) pénètre perpendiculairement à la surface d'enveloppe (21) dans l'évidement (39) et s'appuie avec des zones d'appui (41) dans la direction de la génératrice (3) contre les faces de guidage (40).

3. Dispositif de soutien selon la revendication 2,
**caractérisé en ce que**
- le dispositif d'accouplement (23) présente au moins un boulon fileté (44) qui est vissé dans une ouverture filetée (45) s'étendant dans le corps d'accouplement (38) dans la direction de la génératrice (30),
- l'une des zones d'appui (41) est réalisée au niveau d'une extrémité du boulon fileté (43) saillant hors de l'ouverture filetée (45).

4. Dispositif de soutien selon la revendication 3,
**caractérisé en ce que**
- l'ouverture filetée (45) est réalisée sous forme d'ouverture de passage,
- de chaque côté de l'ouverture filetée (45) dépasse une extrémité de boulon fileté (43) sur laquelle est réalisée à chaque fois l'une des zones d'appui (41).

5. Dispositif de soutien selon la revendication 4,
**caractérisé en ce que**
- dans l'ouverture filetée (45) sont vissés deux boulons filetés (44) qui font saillie avec leurs extrémités de boulon fileté (43) sur des côtés opposés hors de l'ouverture filetée (45) ou
- **en ce que** dans l'ouverture filetée (45) est vissé un boulon fileté unique (44) qui fait saillie avec son extrémité de boulon fileté (43) sur des côtés opposés hors de l'ouverture filetée (45).

6. Dispositif de soutien selon l'une quelconque des revendications 3 à 5, **caractérisé en ce que** chaque boulon fileté (44) présente, sur son extrémité de boulon fileté (43) saillant hors de l'ouverture filetée (45), un polygone extérieur (46) approprié pour introduire un couple de vissage.

7. Dispositif de soutien selon l'une quelconque des revendications 2 à 6, **caractérisé en ce que**
- la tête d'enroulement (9) présente au moins une plaque de serrage extérieure (42) et au moins une plaque de serrage intérieure, entre lesquelles les extrémités (8) des barres d'enroulement (6) sont serrées,
- et **en ce que** le corps d'accouplement (38) est disposé fixement sur l'une des plaques de serrage extérieures (42).

8. Dispositif de soutien selon l'une quelconque des revendications 2 à 7, **caractérisé en ce que** le corps d'accouplement (38) est fixé à la tête d'enroulement (9) par un accouplement à engagement positif (53), notamment par un accouplement à queue d'aronde (53).

9. Dispositif de soutien selon l'une quelconque des revendications 2 à 8, **caractérisé en ce que**
- le dispositif de serrage (22) présente une clavette (28) proche du noyau et une clavette (29) éloignée du noyau, qui sont montées de manière déplaçable dans la direction de la génératrice (30) sur la tête d'enroulement (9) et sur le support d'enroulement (11) respectif et qui doivent être serrées l'une contre l'autre au moyen d'un tirant d'ancrage (34) s'étendant dans la direction de la génératrice (30), le support d'enroulement respectif (11) et la tête d'enroulement (9) ayant tendance à s'écarter l'un de l'autre perpendiculairement à la surface d'enveloppe (21),
- **en ce que** le corps d'accouplement (38) contient une ouverture de passage (47) qui s'étend dans la direction de la génératrice (30), et
- **en ce que** le tirant d'ancrage (34) s'étend à travers l'ouverture de passage (47).

10. Dispositif de soutien selon la revendication 9, **caractérisé en ce que** le tirant d'ancrage (34) s'appuie au niveau de son côté extérieur (48) par le biais d'un matériau d'amortissement (50) contre un côté intérieur (49) de l'ouverture de passage (47).

11. Dispositif de soutien selon la revendication 9 ou 10, **caractérisé en ce que** l'ouverture de passage (47) contient un tube (51) en matériau d'amortissement (50), à travers lequel s'étend le tirant d'ancrage (34).

12. Dispositif de soutien selon l'une quelconque des revendications 1 à 11, **caractérisé en ce que** les supports d'enroulement (11) sont connectés l'un à l'autre, et sont supportés radialement à l'extérieur au moyen d'au moins une bague de support (13, 25) fermée et s'étendant dans la direction périphérique.

13. Dispositif de soutien selon l'une quelconque des revendications 1 à 12, **caractérisé en ce que** le dispositif de soutien (10) est fixé axialement et élastiquement au côté frontal (4) du noyau (2).
